# EUROPÄISCHE PATENTSCHRIFT

(11) **EP 0 737 879 B1**
(45) Veröffentlichungstag und Bekanntmachung des Hinweises auf die Patenterteilung: **06.10.1999**
(21) Anmeldenummer: 96105440.0
(22) Anmeldetag: 04.04.1996
(51) Int. Cl.: G02B 27/22, G02B 27/24, G09F 19/18, H04N 9/31

(54) **Vorrichtung zur Erzeugung von durch Spiegelung entstehenden Luftbildern**
Device for generating aerial images by means of reflection
Dispositif pour la génération d'images aériennes par réflexion

(30) Priorität: 10.04.1995 DE 19512962
(43) Veröffentlichungstag der Anmeldung: 16.10.1996
(73) Patentinhaber: Cinetics Performance W. Lettner GmbH, 53945 Blankenheim-Mühlheim (DE)
(72) Erfinder: Lettner, Wolfgang, 53945 Blankenheim-Mühlheim (DE)
(74) Vertreter: Freischem, Werner, Dipl.-Ing.

(56) Entgegenhaltungen:
- EP-A- 0 075 495
- EP-A- 0 310 077
- JP-A- 6 348 817
- US-A- 3 316 803
- US-A- 5 313 276

## Beschreibung

Die Erfindung bezieht sich auf eine Vorrichtung zur Erzeugung von durch Spiegelung entstehenden Luftbildern
- mit einem Gehäuse, in dem ein Bühnenboden angeordnet ist und das eine die Sicht auf die Bühne freigebende Sichtöffnung aufweist,
- mit einer hinter der Sichtöffnung und vor der Bühne im Winkel von 40° - 50° angeordneten durchsichtigen und 10 bis 50 % reflektierenden Optikscheibe und
- mit mindestens einem im Abstand unterhalb der Optikscheibe angeordneten Bildschirm, dessen Bild für die Augen des Betrachters als Luftbild auf der Bühne erscheint.

Eine Vorrichtung dieser Art ist bekannt aus der DE 38 08 406 A1. Die bekannte Vorrichtung hat eine 3 bis 9 m breite und entsprechend tiefe Bühne, die innerhalb eines im wesentlichen kubischen Gehäuses untergebracht ist. Die Optikscheibe ist so angeordnet, daß sie den Zuschauern den Blick auf die Bühne freigibt und gleichzeitig durch Spiegelung Luftbilder auf der Bühne erzeugt.

Das Gehäuse ist durch eine von der Rückwand bis zum mittleren Bereich des Gehäuses sich erstreckende, als Bühne dienende Zwischenwand in einen unteren Projektionsraum und einen oberen Bühnenraum unterteilt, wobei im Projektionsraum in Nähe der Rückwand mindestens ein Projektor und im Abstand davon ein durchscheinender Bildschirm angeordnet sind und vor dem Projektionsraum ein um eine waagerechte, rechtwinklig zu den Seitenwänden verlaufende Achse geneigter Umlenkspiegel und über dem Umlenkspiegel eine gleichsinnig zum Umlenkspiegel geneigte Optikscheibe angeordnet sind. Gehäuse und die Bühne bestehen aus leicht zusammensetzbaren Elementen und Wänden, die auf Ausstellungen, Messen oder dergleichen zusammengesetzt und zu einem Gehäuse mit Bühne aufgebaut und mit Optikscheibe, Umlenkspiegel und mit Bilderzeugungsgeräten wie Dia-, Film- oder Video-Projektoren, Bildschirmen und mit Steuergeräten und Computern bestückt werden.

Auch wenn die Wände des Gehäuses und der Bühne leicht zusammensetzbar sind, ist der Aufbau einer derartigen Vorrichtung und das Einsetzen, Ausrichten und Anschließen der Bilderzeugungsgeräte arbeits- und zeitaufwendig.

Aus der DE 38 08 406 A1 ist auch eine displayartige Vorrichtung zum Erzeugen von Luftbildern bekannt, bei der auf eine Bühne verzichtet wurde und die von einem Fernsehgerät oder von einem Objekt abgeleiteten Luftbilder für den Betrachter frei im Raum schweben.

Der vorliegenden Erfindung liegt die Aufgabe zugrunde, eine Vorrichtung der eingangs beschriebenen Art so auszubilden, daß sie schnell und mit geringem Arbeitsaufwand aufgebaut oder zusammengesetzt werden kann.

Diese Aufgabe wird erfindungsgemäß dadurch gelöst, daß das Gehäuse aus einem, zwei oder drei transportablen Teilen besteht und mindestens eine Einschuböffnung aufweist, durch die in den Raum unterhalb der geneigten Optikscheibe ein Gerätewagen einfahrbar ist, der mit Bilderzeugungsgeräten wie Bildschirm, Fernsehgerät, Video-Recorder, Video-, Film-, Dia- oder Laser-Projektoren, Steuergeräten, Verstärkern oder dergleichen bestückt ist.

Der Gerätewagen kann unter dem Boden der Bühne in das Gehäuse eingeschoben werden, wenn die Einschuböffnung auf der der Sichtöffnung gegenüberliegenden Seite des Gehäuses angeordnet ist. Die Einschuböffnung kann aber auch zusätzlich oder ausschließlich seitlich der Bühne angeordnet sein, so daß der Gerätewagen vor der Vorderkannte und innerhalb des Bühnenbodens in das Gehäuse eingeschoben werden kann.

Bei einer alternativen Ausführungsform ist auch die geneigte Optikscheibe am Gerätewagen befestigt, so daß der Gerätewagen parallel zur Vorderkante des Bühnenbodens in das Gehäuse einschiebbar ausgebildet sein muß.

Weil alle Bilderzeugungsgeräte im Gerätewagen ausgerichtet und befestigt sind und an einem Energieverteiler angeschlossen sind, ist nach dem Aufstellen des Gehäuses lediglich der Gerätewagen in das Gehäuse einzuschieben und an eine Stromquelle anzuschließen, um die Vorrichtung betriebsbereit zu haben und eine von einem Computer gesteuerte Show ablaufen kann.

Um dem Gehäuse eine große Formsteifigkeit zu geben, hat es eine Zylinderform. In diesem Zylinder ist eine große, der Bühne entsprechende Sichtöffnung angeordnet, deren Ebene innerhalb des Zylinders liegt, und zwar in einem Abstand von der Zylinderachse, der 0,5 - 0,6 mal dem Radius des Zylinders entspricht. Der Teil des zylindrischen Gehäuses, der sich vor der Ebene der Sichtöffnung befindet, ist als Steuerpult ausgebildet, an dem der Zuschauer interaktiv die auf der Bühne ablaufende Show beeinflussen oder steuern kann.

Das zylindrische Gehäuse mit Bühnenboden aber ohne Gerätewagen und ohne die relativ schweren Bilderzeugungsgeräte kann bei einem Durchmesser von 1 bis 2 m als einstückige Einheit transportiert werden. Damit das Gehäuse beispielsweise besser durch Türöffnungen oder dergleichen transportiert werden kann, kann es zweckmäßig sein das Gehäuse zu beiden Seiten der Sichtöffnung mit der Breite dieser Sichtöffnung abzuflachen.

Ist der Durchmesser des zylindrischen Gehäuses größer als 1,80 m, ist es zweckmäßig, das Gehäuse in zwei Halbzylinder teilbar auszubilden, wobei der erste Halbzylinder das Steuerpult, die Sichtöffnung und den die Sichtöffnung umgebenden rahmenartigen Teil aufweist und der zweite Halbzylinder den Bühnenboden. Die Halbzylinder können über Scharniere miteinander verbunden werden, so daß im aufgeschwenkten Zustand der Gerätewagen in das Gehäuse einfahren kann. Im geschlossenen Zustand werden die Halbzylinder so miteinander verbunden, daß eine ausreichende Stabilität gewährleistet ist.

In der folgenden Beschreibung werden Ausführungsbeispiele der erfindungsgemäßen Vorrichtung unter Bezugnahme auf die Zeichnungen näher erläutert. Die Zeichnungen zeigen in
- Fig. 1, 2 und 3: Vertikal-Schnittansichten von drei Ausführungsformen der erfindungsgemäßen Vorrichtung,
- Fig. 4: eine schaubildliche Frontansicht und
- Fig. 5: eine horizontale Schnittansicht einer erfindungsgemäßen Vorrichtung,
- Fig. 6: die Vertikal-Schnittansicht einer weiteren Ausführungsform der Erfindung und
- Fig. 7: eine Ansicht nach der Schnittlinie VII-VII in Fig. 6.

In der folgenden Beschreibung sind gleichwirkende Teile unterschiedlicher Ausführungsformen mit gleichen Bezugszeichen versehen.

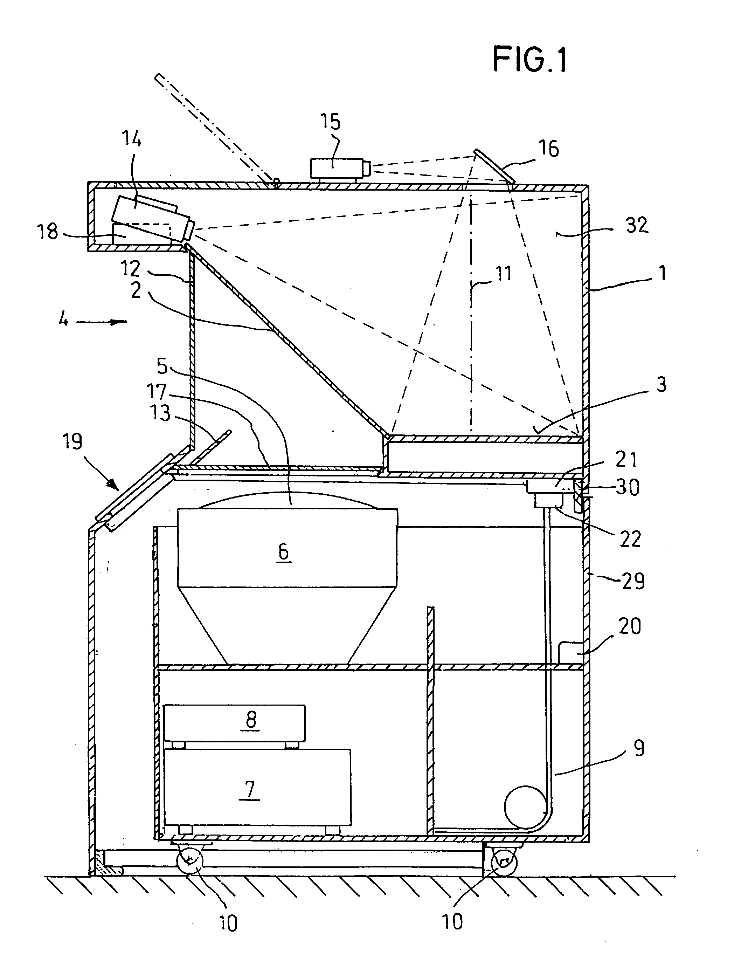

Die in Fig. 1 dargestellte Vorrichtung zur Erzeugung von durch Spiegelung entstehenden Luftbildern 11, die für den Betrachter auf einer Bühne 3 erscheinen, weist ein zylindrisches Gehäuse 1 auf, in dem eine Sichtöffnung 4 eingearbeitet ist, die den Blick auf eine Bühne freigibt, die durch den Bühnenboden 3 und eine hohlzylindrische Seiten- und Rückwand 32 begrenzt ist. Hinter der Sichtöffnung 4 und vor der Bühne 3 ist im Winkel von etwa 45° eine durchsichtige und 10 bis 50 % reflektierende Optikscheibe 2 angeordnet. Unterhalb dieser Optikscheibe 2 befinden sich Bilderzeugungsgeräte, deren Bilder als Luftbilder 11 auf der Bühne 3 erscheinen. In Fig. 1 werden die Bilder in einem Bildschirm 5 von einem Fernsehgerät 6 erzeugt, das zusammen mit anderen Geräten, z.B. Video-Recordern 7, Verstärkern 8, in einem Gerätewagen 9 untergebracht ist. Das Gehäuse 1 ist auf der der Sichtöffnung 4 gegenüberliegenden Seite mit einer Einschuböffnung versehen, durch welche der Gerätewagen 9 in das Gehäuse 1 so einschiebbar ist, daß der Bildschirm 5 oder mehrere Bildschirme unter der geneigten Optikscheibe 2 stehen, wenn der Wagen 9 bis zum Anschlag 30 in das Gehäuse 1 eingefahren ist.

Unterhalb der Sichtöffnung 4 ist ein Steuerpult 19 angeordnet, von dem aus die im Gerätewagen 9 untergebrachten Geräte und auch andere Geräte, die im Gehäuse 1 untergebracht sind, gesteuert werden können. Oberhalb der Sichtöffnung 4 befinden sich im Gehäuse 1 Lautsprecher 18, ferner ein Projektor 14, der auf einer diffus reflektierenden Rück- und Seitenwand der Bühne 3 Bilder erzeugt. Auf der Decke des Gehäuses 1 befindet sich ein Projektor 15, der über einen Umlenkspiegel 16 auf dem Bühnenboden Bilder erzeugt. Der Bühnenboden 3 ist schwach so zum Zuschauer hin geneigt, daß die auf dem Bühnenboden 3 erscheinenden Projektionen für den Zuschauer sichtbar sind. In der Sichtöffnung 4 befindet sich eine entspiegelte Schutzscheibe 12. Ferner ist eine Sichtblende 13 vorgesehen, damit der Zuschauer nicht von oben auf die Bilderzeugungsgeräte schauen kann. Zwischen Bildschirm 5 und der Optikscheibe 2 kann noch ein Kontrastfilter 17 angeordnet sein. Der Gerätewagen 9 kann über eine Steckdose 20 an das elektrische Netz angeschlossen werden.

Die Rückwand 29 des Gerätewagens 9 verschließt bei eingefahrenem Gerätewagen 9 die Einschuböffnung des Gehäuses 1. Diese Rückwand 29 ist also derart zylindrisch gekrümmt wie auch das Gehäuse 1.

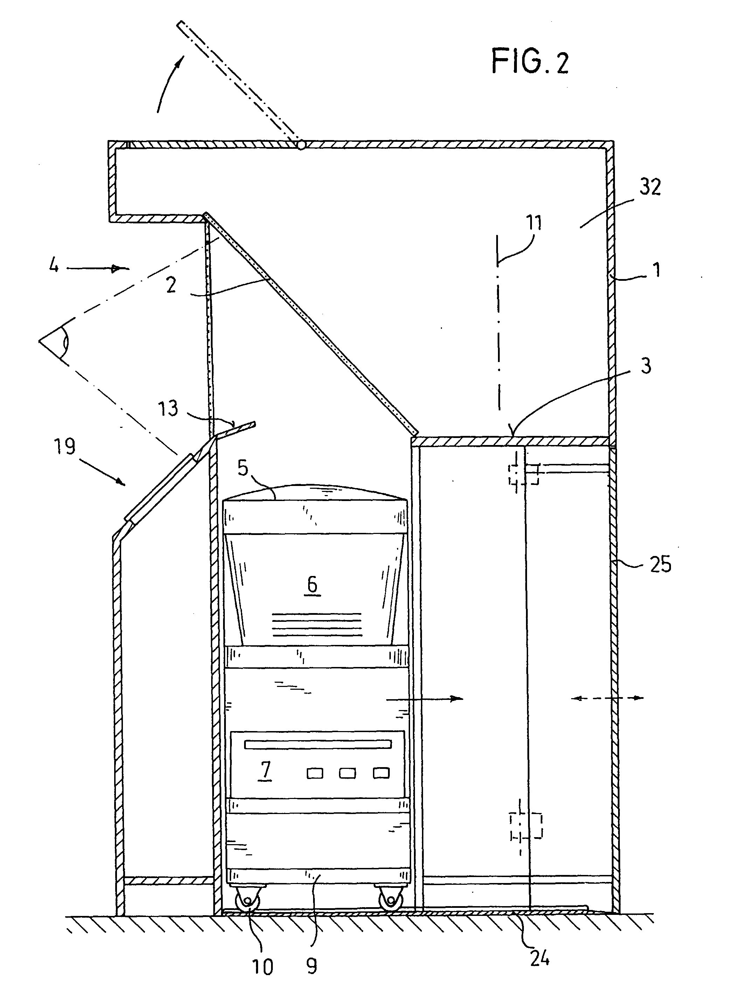

Bei dem Ausführungsbeispiel gemäß Fig. 2 ist der Gerätewagen 9 kürzer ausgebildet, und im Gehäuse 1 befindet sich eine Tür 25, welche die Einschuböffnung zum Durchlaß des Gerätewagens 9 verschließt. Bei dieser Ausführungsform hat das Gehäuse 1 Bodenschienen 24, auf denen der Gerätewagen 9 mit seinen Rollen 10 verschiebbar geführt ist.

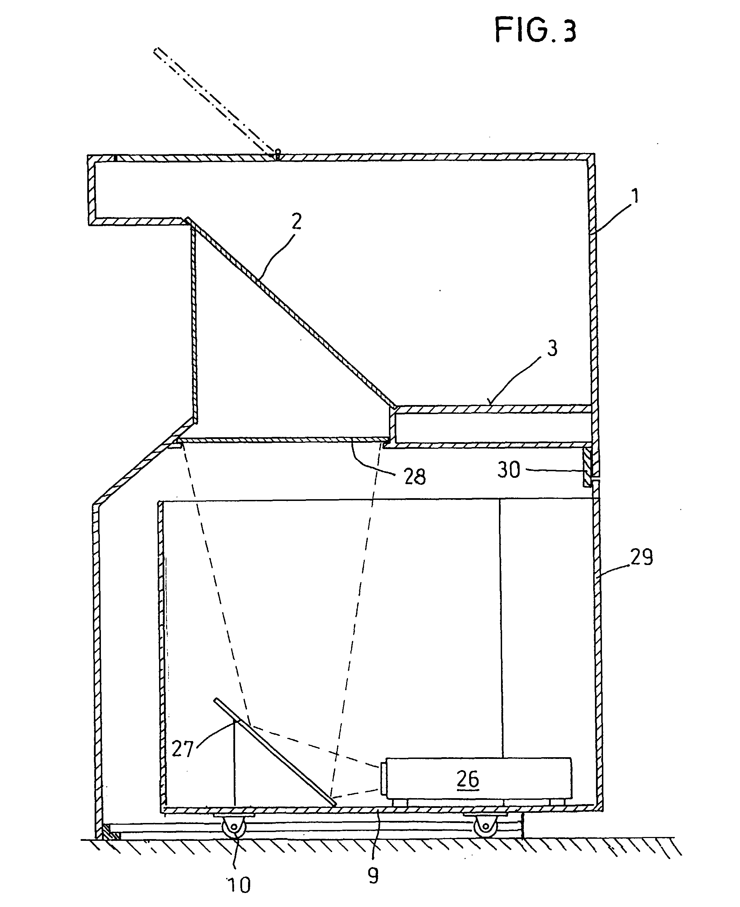

Bei dem Ausführungsbeispiel nach Fig. 3 ist der Gerätewagen 9 mit einem Projektor 26 und einem Umlenkspiegel 27 bestückt. Das vom Projektor 26 projizierte Bild erscheint auf einem Bildschirm 28, der im Gehäuse 1 vor dem Bühnenboden 3 und unterhalb der geneigten Optikscheibe 2 angeordnet ist.

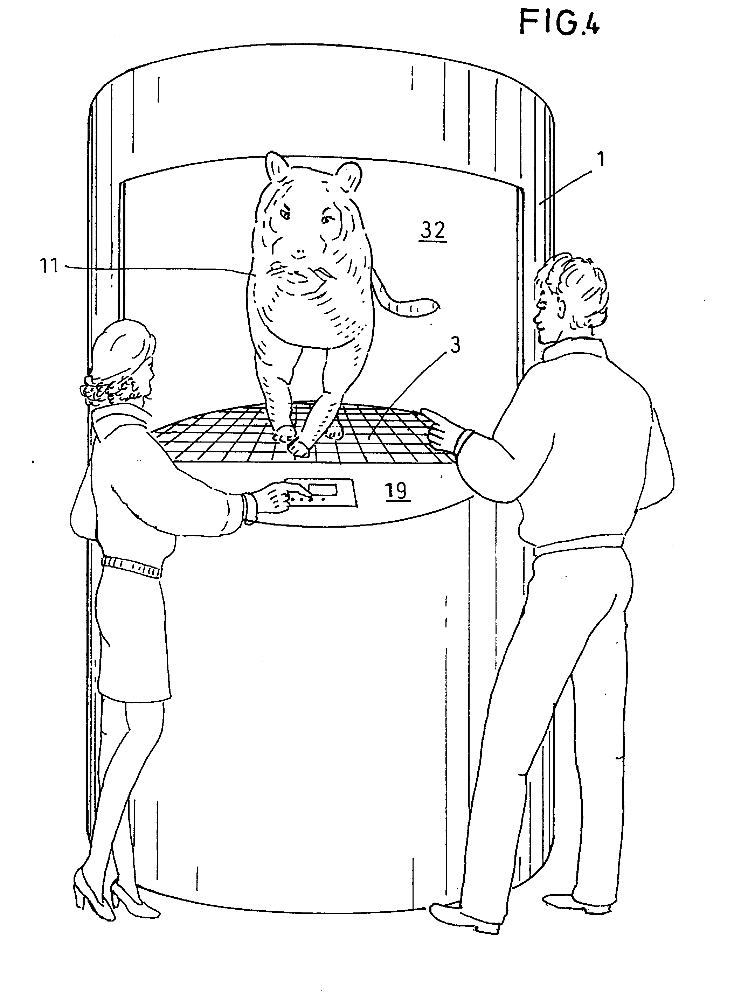

Fig. 4 zeigt die Vorrichtung nach der Erfindung im Betrieb. Die hohlzylindrische Begrenzung des Bühnenraumes in Verbindung mit entsprechenden Projektionen auf der hohlzylindrischen Wand 32 täuscht eine große Raumtiefe vor, die noch gesteigert werden kann durch die Projektionen auf den Bühnenboden 3.

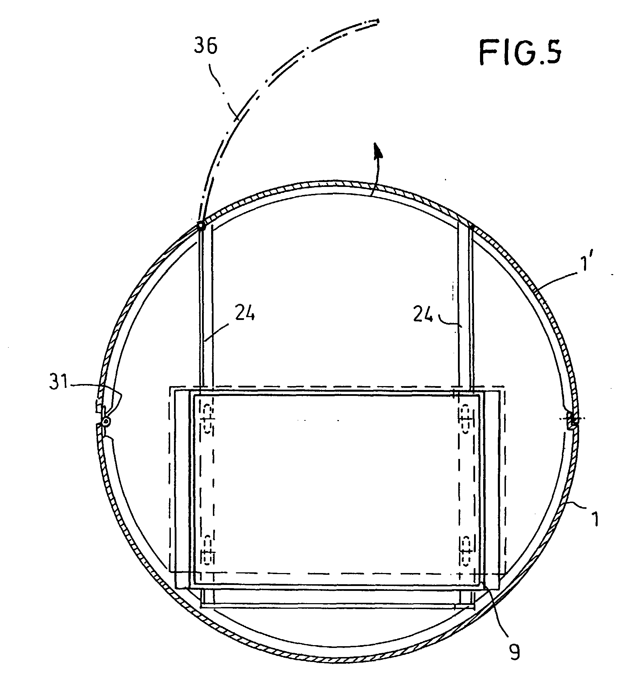

Die Fig. 5 zeigt einen Horizontalschnitt durch ein zylindrisches Gehäuse, das sich aus zwei Halbzylindern 1 und 1' zusammensetzt. Die beiden Halbzylinder 1 und 1' sind über Scharniere 31 miteinander verbunden. Zum Einfahren und Ausfahren des Gerätewagens 9 wird der Halbzylinder 1' in Öffnungsstellung geschwenkt. In Schließstellung wird der Halbzylinder 1' an der aufschwenkbaren Seite mit der anderen Gehäusehälfte verschraubt, um dem Gehäuse eine ausreichende Stabilität zu geben. In der aufschwenkbaren Gehäusehälfte 1' befindet sich noch eine Tür 36, die zur Inspektion der Vorrichtung geöffnet und geschlossen werden kann.

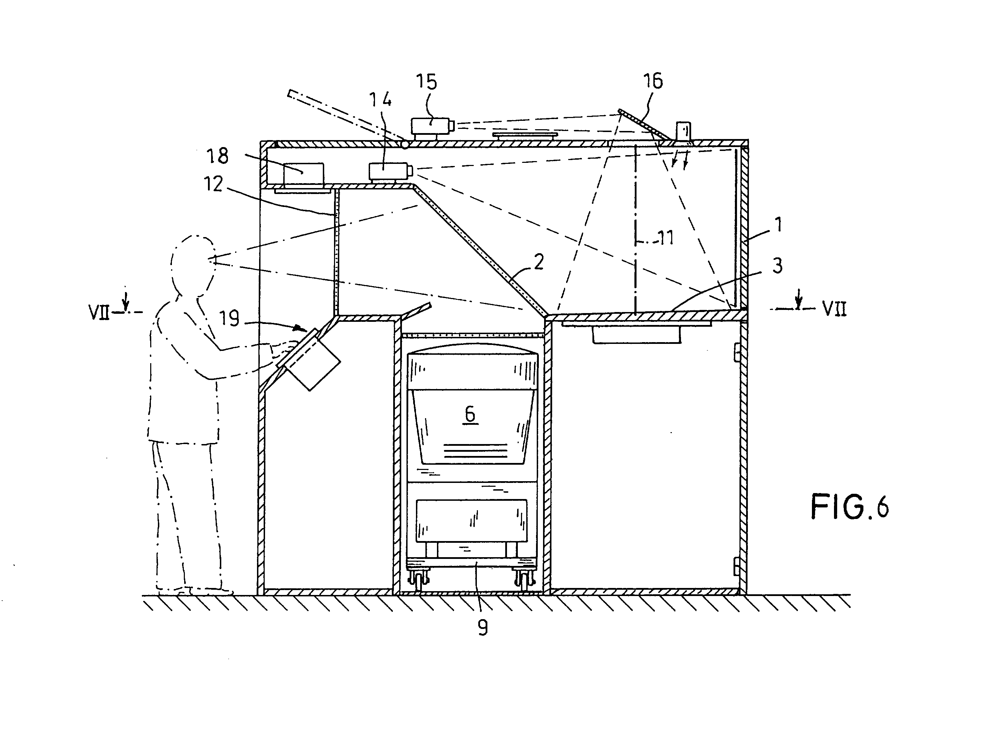

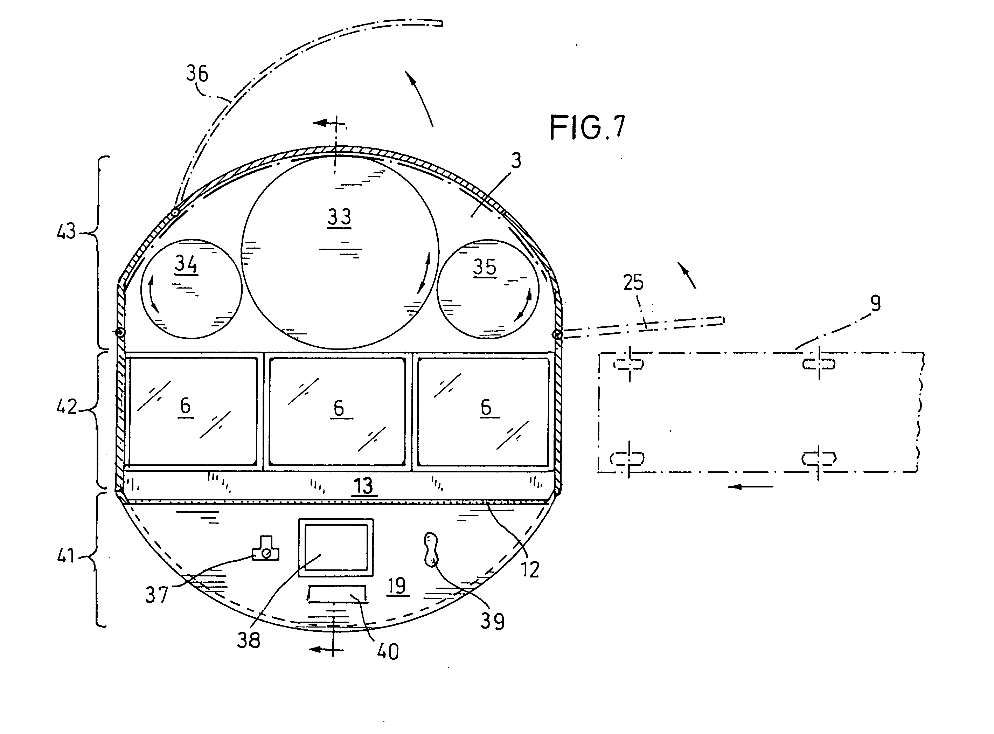

Bei der Ausführungsform nach Fig. 6 und Fig. 7 ist der Gerätewagen 9 mit drei großflächigen Fernsehgeräten 6 bestückt. Der Gerätewagen 9 ist von der Seite, d.h. parallel zur Vorderkante des Bühnenbodens 3, in das Gehäuse 1 einfahrbar.

Im Bühnenboden 3 befinden sich drei Drehbühnen 33, 34 und 35. Mit Hilfe dieser Drehbühnen können auf dem Bühnenboden 3 auch stehende Objekte unabhängig voneinander bewegt werden.

Das Steuerpult 19 ist ausgerüstet mit einem Joystick 37 für Bildmanupulationen, einem Touchscreen 38, mit dessen Hilfe durch Druck auf die dort erscheinenden Symbole das gewünschte Bildprogramm gewählt werden kann, einem Telefon 39 mit direkter Standleitung zum Beispiel zu einem Informationsservice und einem Drucker 40 von dem der Kunde Ausdrucke über ihn interessierende Themen erhalten kann.

Schließlich kann - wie Fig. 7 zeigt - ein größeres Gehäuse auch aus drei Teilen 41, 42 und 43 zusammengesetzt sein, dabei besteht das Vorderteil 41 aus dem Steuerpult 19 und dem die Sichtöffnung umgebenden rahmenartigen Teil in das eine Schutzscheibe 12 eingesetzt sein kann. Das Mittelteil 42 verbindet das Vorderteil 41 mit dem Hinterteil 43 und umfaßt im wesentlichen den Raum, der den Gerätewagen aufnimmt und die schrägstehende Optikscheibe. Das Hinterteil 43 enthält den Bühnenboden 3.

An den Stoßfugen der drei Teile 41, 42, 43 sind versteifende Profile angebracht, die über Schrauben oder Spannverschlüsse miteinander verbunden werden.

### Bezugszeichenliste:

- 1: Gehäuse
- 2: Optikscheibe
- 3: Bühnenboden
- 4: Sichtöffnung
- 5: Bildschirm
- 6: Fernsehgerät
- 7: Video-Recorder
- 8: Verstärker
- 9: Gerätewagen
- 10: Rollen
- 11: Luftbild
- 12: entspiegelte Schutzscheibe
- 13: Sichtblende
- 14: Projektor für Rückwand-Projektion
- 15: Projektor für Boden-Projektion
- 16: Umlenkspiegel
- 17: Kontrastfilter
- 18: Lautsprecher
- 19: Steuerpult
- 20: Steckdose
- 21: Steckleiste
- 22: Stecker
- 23: Revisionsluke
- 24: Bodenplatte oder -schiene
- 25: Tür
- 26: Projektor
- 27: Umlenkspiegel
- 28: Bildschirm
- 29: Rückwand des Wagens
- 30: Anschlag
- 31: Scharnier
- 32: Bühnenwand
- 33: Drehbühne
- 34: Drehbühne
- 35: Drehbühne
- 36: Tür
- 37: Joystick
- 38: Touchscreen
- 39: Telefon
- 40: Drucker

## Patentansprüche

1. Vorrichtung zur Erzeugung von durch Spiegelung entstehenden Luftbildern (11)
- mit einem Gehäuse (1), in dem ein Bühnenboden (3) angeordnet ist und das eine die Sicht auf die Bühne freigebende Sichtöffnung (4) aufweist,
- mit einer hinter der Sichtöffnung (4) und vor der Bühne im Winkel von 40° - 50° angeordneten durchsichtigen und 10 bis 50 % reflektierenden Optikscheibe (2) und
- mit mindestens einem im Abstand unterhalb der Optikscheibe (2) angeordneten Bildschirm (5), dessen Bild für die Augen des Betrachters als Luftbild (11) auf der Bühne erscheint,
**dadurch gekennzeichnet,** daß die Vorrichtung einen Gerätewagen aufweist, der mit Bilderzeugungsgeräten wie Bildschirm (5), Fernsehgerät (6), Video-Recorder (7), Video-, Film-, Dia- oder Laser-Projektoren (26), Steuergeräten, Verstärkern (8) oder dergleichen bestückt ist, und daß das Gehäuse (1) aus insgesamt einem, zwei oder drei getrennt transportierbaren Teilen besteht und mindestens eine Einschuböffnung aufweist, durch die in den Raum unterhalb der geneigten Optikscheibe (2) der Gerätewagen (7) einfahrbar ist.

2. Vorrichtung zur Erzeugung von durch Spiegelung entstehenden Luftbildern (11)
- mit einem Gehäuse (1), in dem ein Bühnenboden (3) angeordnet ist und das eine die Sicht auf die Bühne freigebende Sichtöffnung (4) aufweist,
- mit einer hinter der Sichtöffnung (4) und vor der Bühne im Winkel von 40° - 50° angeordneten durchsichtigen und 10 bis 50 % reflektierenden Optikscheibe (2) und
- mit mindestens einem im Abstand unterhalb der Optikscheibe (2) angeordneten Bildschirm (5), dessen Bild für die Augen des Betrachters als Luftbild (11) auf der Bühne erscheint,
**dadurch gekennzeichnet,** daß die Vorrichtung einen Gerätewagen aufweist, der mit Bilderzeugungsgeräten (5,6,7,8) und mit der Optikscheibe (9) bestückt ist, und daß das Gehäuse (1) aus insgesamt einem, zwei oder drei getrennt transportierbaren Teilen besteht und mindestens eine Einschuböffnung aufweist, durch die in den Raum unterhalb und vor der Bühne der Gerätewagen (7) einfahrbar ist.

3. Vorrichtung nach Anspruch 1 oder 2, **dadurch gekennzeichnet,** daß am Boden des Gehäuses (1) Schienen (24) für die Räder (10) des Gerätewagens (9) angeordnet sind.

4. Vorrichtung nach einem der Ansprüche 1 bis 3, **dadurch gekennzeichnet,** daß die optimale Stellung des Gerätewagens (9) innerhalb des Gehäuses (1) durch einen Anschlag (30) oder einen Rastpunkt bestimmt ist.

5. Vorrichtung nach einem der Ansprüche 1 bis 4, **dadurch gekennzeichnet,** daß die Rückwand (29) des Gerätewagens (9) in Einschubstellung die Einschuböffnung im Gehäuse (1) verschließt.

6. Vorrichtung nach einem der Ansprüche 1 bis 4, **dadurch gekennzeichnet,** daß die Einschuböffnung für den Gerätewagen (9) durch eine Tür (25) am Gehäuse (1) verschließbar ist.

7. Vorrichtung nach einem der Ansprüche 1 bis 6, **dadurch gekennzeichnet,** daß die Einschuböffnung für den Gerätewagen (9) auf der der Sichtöffnung (4) gegenüberliegenden Seite des Gehäuses (1) angeordnet ist.

8. Vorrichtung nach einem der Ansprüche 1 bis 7, **dadurch gekennzeichnet,** daß der Gerätewagen (9) eine Steckerleiste (21) aufweist, an die die Geräte des Gerätewagens (9) anschließbar sind und die zum Beispiel über eine Steckdose (20) an eine Stromquelle anschließbar ist.

9. Vorrichtung nach einem der Ansprüche 1 bis 8, **dadurch gekennzeichnet,** daß die Bilderzeugungsgeräte des Gerätewagens (9) an ein unterhalb der Sichtöffnung (4) am Gehäuse (1) angeordnetes Steuerpult (19) anschließbar sind für eine interaktive Programm- und/oder Bild- und Ton-Anwahl.

10. Vorrichtung nach einem der Ansprüche 1 bis 9, **dadurch gekennzeichnet,** daß der Boden (3) der Bühne zur Sichtöffnung (4) hin schwach geneigt ist und in der Decke der Bühne eine Öffnung zum Durchlaß einer Bühnenbodenprojektion angeordnet ist.

11. Vorrichtung insbesondere nach einem der Ansprüche 1 bis 10, **dadurch gekennzeichnet,** daß der Boden (3) der Bühne etwa halbkreisförmig ist und die entsprechend gebogene, hohlzylindrische Bühnenwand (32) als diffus reflektierende Fläche ausgebildet ist, auf die von einem oberhalb der Sichtöffnung (4) angeordneten Projektor (14) ein Bild, z.B. eine Landschaft, projizierbar ist.

12. Vorrichtung nach Anspruch 11, **dadurch gekennzeichnet,** daß das Gehäuse (1) zylindrisch ist und als einstückige Einheit transportabel ist.

13. Vorrichtung nach Anspruch 11, **dadurch gekennzeichnet,** daß das zylindrische Gehäuse (1) in zwei Halbzylinder teilbar ist.

## Claims

1. A device for generating virtual images (11) by means of reflection, having
- a housing (1), in which a stage floor (3) is arranged and which comprises a viewing opening (4) providing a view of the stage,
- a transparent, 10 to 50 % reflective optical plate (2) arranged behind the viewing opening and in front of the stage at an angle of 40° to 50° and
- at least one screen (5) arranged at a distance below the optical plate (2), the image from which screen appears to the eye of the observer as a virtual image (11) on the stage,
**characterised in that** the device comprises an equipment truck, which is equipped with image generating devices such as a screen (5), television set (6), video-recorder (7), video, film, slide or laser projectors (26), control devices, amplifiers (8) or the like, and in that the housing (1) consists altogether of one, two or three separately transportable parts and comprises at least one insertion opening, through which the equipment truck (7) may be introduced into the space beneath the inclined optical plate (2).

2. A device for generating virtual images (11) by means of reflection, having
- a housing (1), in which a stage floor (3) is arranged and which comprises a viewing opening (4) providing a view of the stage,
- a transparent, 10 to 50 % reflective optical plate (2) arranged behind the viewing opening and in front of the stage at an angle of 40° to 50° and
- at least one screen (5) arranged at a distance below the optical plate (2), the image from which screen appears to the eye of the observer as a virtual image (11) on the stage,
**characterised in that** the device comprises an equipment trucks, which is equipped with image generating devices (5, 6, 7, 8) and with the optical plate (9), and in that the housing (1) consists altogether of one, two or three separately transportable parts and comprises at least one insertion opening, through which the equipment truck (7) may be introduced into the space beneath and in front of the stage.

3. A device according to claim 1 or claim 2, **characterised in that** rails (24) are arranged on the floor of the housing (1) for the wheels (10) of the equipment truck (9).

4. A device according to any one of claims 1 to 3, **characterised in that** the optimum position of the equipment truck (9) inside the housing (1) is determined by a limit stop (30) or a locking point.

5. A device according to any one of claims 1 to 4, **characterised in that** the rear wall (29) of the equipment truck (9) closes the insertion opening in the housing (1) when said truck (9) is in the inserted position.

6. A device according to any one of claims 1 to 4, **characterised in that** the insertion opening for the equipment truck (9) may be closed by a door (25) on the housing (1).

7. A device according to any one of claims 1 to 6, **characterised in that** the insertion opening for the equipment truck (9) is arranged on the opposite side of the housing (1) from the viewing opening (4).

8. A device according to any one of claims 1 to 7, **characterised in that** the equipment truck (9) comprises a plug board (21), to which the devices on the equipment truck (9) may be connected and which may be connected to a current supply for example by means of a socket (20).

9. A device according to any one of claims 1 to 8, **characterised in that** the image generating devices on the equipment truck (9) may be connected to a control panel (19) arranged on the housing (1) beneath the viewing opening (4) for interactive programme and/or image and sound selection.

10. A device according to any one of claims 1 to 9, **characterised in that** the floor (3) of the stage is inclined slightly towards the viewing opening and an opening for projection onto the stage floor is arranged in the ceiling of the stage.

11. A device in particular according to any one of claims 1 to 10, **characterised in that** the floor (3) of the stage is approximately semi-circular and the correspondingly curved, hollow-cylindrical stage wall (32) takes the form of a diffusely reflecting surface, onto which an image, e.g. of a landscape, may be projected by a projector (14) arranged above the viewing opening (4).

12. A device according to claim 11, **characterised in that** the housing (1) is cylindrical and may be transported as a one-piece unit.

13. A device according to claim 11, **characterised in that** the cylindrical housing (1) may be divided into two half-cylinders.

## Revendications

1. Dispositif pour la génération d'images aériennes (11) par réflexion
- avec une enveloppe (1), dans laquelle est agencé un plancher de scène (3) et présentant une ouverture de visualisation (4) permettant d'observer la scène,
- avec un verre optique (2) transparent et 10 à 50% réfléchissant, agencé derrière l'ouverture de visualisation (4) et devant la scène selon un angle de 40 à 50°, et
- avec au moins un écran (5) agencé à distance sous le verre optique (2), et dont l'image apparaît aux yeux de l'observateur comme une image aérienne (11) située sur la scène,
caractérisé en ce que le dispositif comprend un chariot d'appareillage qui est équipé d'appareils de génération d'images tels que l'écran (5), le téléviseur (6), le magnétoscope (7), les projecteurs de vidéos, films, diapositives ou images laser (26), d'appareils de commande, d'amplificateurs (8) ou similaires, et en ce que l'enveloppe (1) se compose au total d'une, deux ou trois parties transportables séparément et présente au moins une ouverture d'insertion, à travers laquelle le chariot d'appareillage (9) peut être introduit dans l'espace situé sous le verre optique (2) incliné.

2. Dispositif pour la génération d'images aériennes (11) par réflexion
- avec une enveloppe (1), dans laquelle est agencé un plancher de scène (3) et présentant une ouverture de visualisation (4) permettant d'observer la scène,
- avec un verre optique (2) transparent et 10 à 50% réfléchissant, agencé derrière l'ouverture de visualisation (4) et devant la scène selon un angle de 40 à 50°, et
- avec au moins un écran (5) agencé à distance sous le verre optique (2), et dont l'image apparaît aux yeux de l'observateur comme une image aérienne (11) située sur la scène,
caractérisé en ce que le dispositif comprend un chariot d'appareillage qui est équipé d'appareils de génération d'images (5, 6, 7, 8) et du verre optique (9) et en ce que l'enveloppe (1) se compose au total d'une, deux ou trois parties transportables séparément et présente au moins une ouverture d'insertion, à travers laquelle le chariot d'appareillage (9) peut être introduit dans l'espace situé sous et devant la scène.

3. Dispositif selon la revendication 1 ou 2, caractérisé en ce que des rails (24) pour les roues (10) du chariot d'appareillage (9) sont agencées au fond de l'enveloppe (1).

4. Dispositif selon l'une des revendications 1 à 3, caractérisé en ce que la position optimale du chariot d'appareillage (9) à l'intérieur de l'enveloppe (1) est définie par une butée (30) ou un cran d'arrêt.

5. Dispositif selon l'une des revendications 1 à 4, caractérisé en ce qu'en position d'insertion, la paroi arrière (29) du chariot d'appareillage (9) obture l'ouverture d'insertion que présente l'enveloppe (1).

6. Dispositif selon l'une des revendications 1 à 4, caractérisé en ce que l'ouverture d'insertion du chariot d'appareillage (9) peut être fermée au moyen d'une porte (25) que présente l'enveloppe (1).

7. Dispositif selon l'une des revendications 1 à 6, caractérisé en ce que l'ouverture d'insertion du chariot d'appareillage (9) est agencée sur le côté de l'enveloppe (1) qui est opposé à l'ouverture de visualisation (4).

8. Dispositif selon l'une des revendications 1 à 7, caractérisé en ce que le chariot d'appareillage (9) présente une barrette de connexion (21) à laquelle les appareils du chariot d'appareillage (9) peuvent être raccordés et qui peut elle-même être raccordée à une source de courant au moyen d'une prise de courant (20) par exemple.

9. Dispositif selon l'une des revendications 1 à 8, caractérisé en ce que les appareils de génération d'images du chariot d'appareillage (9) peuvent être raccordés à un pupitre de commande (19) agencé sur l'enveloppe (1), au-dessous de l'ouverture de visualisation (4), pour la sélection d'un programme interactif et/ou d'image et de son.

10. Dispositif selon l'une des revendications 1 à 9, caractérisé en ce que le plancher (3) de la scène est légèrement incliné en direction de l'ouverture de visualisation (4) et en ce que le plafond de la scène présente une ouverture de passage d'une projection sur le plancher de la scène.

11. Dispositif en particulier selon l'une des revendications 1 à 10, caractérisé en ce que le plancher (3) de la scène est sensiblement semi-circulaire et en ce que la paroi de scène (32) en forme de cylindre creux de courbure correspondante se présente sous la forme d'une surface à réflexion diffuse, sur laquelle une image, par exemple un paysage, peut être projeté par un projecteur (14) agencé au-dessus de l'ouverture de visualisation (4).

12. Dispositif selon la revendication 11, caractérisé en ce que l'enveloppe (1) est cylindrique et peut être transportée en tant qu'unité monobloc.

13. Dispositif selon la revendication 11, caractérisé en ce que l'enveloppe cylindrique (1) peut être divisée en deux demi-cylindres.
